# EUROPEAN PATENT SPECIFICATION

(11) **EP 0 680 701 B1**
(45) Date of publication and mention of the grant of the patent: **30.05.2001**
(21) Application number: 95105890.8
(22) Date of filing: 20.04.1995
(51) Int. Cl.: A23P 1/08, A23G 3/20, B65B 3/02

(54) **A method of forming a decorative cap on a food product and the product concerned**
Herstellungsverfahren von einer dekorativen Kappe eines Nahrungsmittels und Nahrungsmittel selbst
Procédé pour former un capuchon décoratif sur un aliment et aliment obtenu

(30) Priority: 03.05.1994 CH 137694
(43) Date of publication of application: 08.11.1995
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Ferrero, Pietro, B-1640 Rhode St. Genese (BE)
(74) Representative: Rambelli, Paolo

(56) References cited:
- EP-A- 0 082 952
- EP-A- 0 361 893
- EP-A- 0 554 707
- EP-A- 0 591 742
- BE-A- 641 150
- FR-A- 2 049 463
- FR-A- 2 262 916
- GB-A- 758 613
- GB-A- 784 063
- LU-A- 66 297
- US-A- 1 621 568
- US-A- 1 645 260
- US-A- 3 681 094

## Description

The present invention relates to a method of forming a decorative cap on a food product, and has been developed with particular attention to its possible use to form decorative caps of material such as cream, icing and/or chocolate on food products such as pralines or the like.

A method of the type specified above is described, for example, in European patent application EP-A-0 554 707, in which the cap is produced by spraying the material constituting it onto an underlying product such as a praline.

This method constitutes a valid alternative to decoration formed according to methods similar to those currently used in manual confectionery work, particularly as regards the ability to achieve high production rates.

Although the solution described in the European application mentioned above can be considered entirely satisfactory, the Applicant has found that it is possible to achieve further improvements, particularly as regards the overall speed and efficiency of the manufacturing cycle of the product, especially when it has to be wrapped in a sheet of material such as aluminium or a similar product.

The object of the present invention is to achieve a further improvement in precisely this direction.

In that respect, FR-A-2 262 916 discloses a method of forming a food product packaged in a wrapper of sheet material and having a cap thereon, the method comprising the steps of providing the product, shaping the sheet material into a generally cup-like configuration so as to form a cavity for housing the product, pouring a measured quantity of a confectionary mass into the housing cavity, centrifuging to distribute the mass up the walls of the cavity, and allowing it to solidity, inserting the product into the cavity so that a cap is formed on the product, closing the wrapper around the product and pressing it against the side of the product opposite the cap.

The food product in question is comprised of a nut, a raisin or a fruit in a liquid or creamy filling and a further mass which, together with the cap, forms a closed shell for the rest of the product.

According to the present invention, a further improvement is achieved by virtue of a method having the specific characteristics recited in Claim 1. The invention also relates to the product obtained, as in claim 4.

The invention will now be described, purely by way of nonlimiting example, with reference to the appended drawings, in which:
Figures 1 to 4 show, schematically, successive steps of the method according to the invention, and
Figure 5 shows, in greater detail, the characteristics of the final product obtained by the method according to the invention.

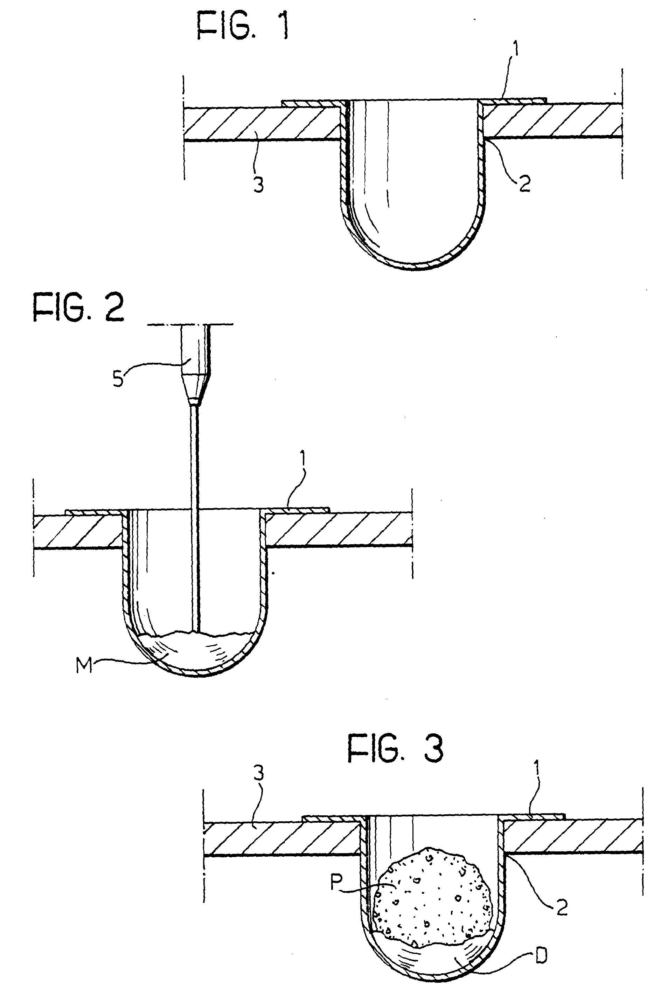

Figures 1 to 4 show, essentially, the packaging sequence for a food product which, in the specific embodiment illustrated, is constituted by a praline. For example, it may be a praline constituted by a spherical wafer shell containing a creamy or pasty mass, possibly with the insertion of centres such as dried fruit, and coated with a covering (a coating) of chocolate or of a similar creamy product, preferably with a further outer coating of chopped nuts and/or ground almonds or grated coconut. Products of this type are widely known in the art; the product sold under the trade name of Ferrero Rocher may be mentioned by way of example.

In the step shown in Figure 1, the sheet 1 of aluminium or a similar wrapping material is subjected to a preliminary shaping step (for example, by pressing or drawing) to give it a generally cup-like (or artichoke-like) configuration and is then placed in a hole 2 in a support plate 3.

The product P to be packaged is then inserted, usually by being dropped, into the cup-shaped aluminium sheet 1 as shown in Figure 3 (the step of Figure 2, which is a characterising feature of the present invention will be described in greater detail below).

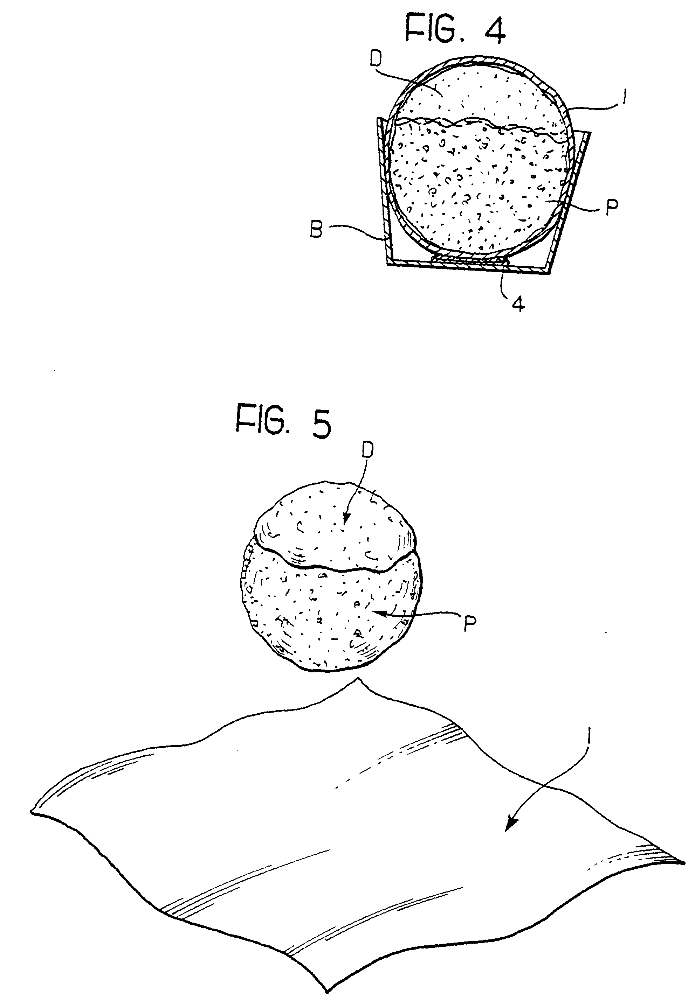

The aluminium sheet 1 is then closed around the product P like a bow as a result of an automatic manipulation and is pressed against the product P as shown schematically in Figure 4, in which an end piece resulting from the pressing of the bow formed from the sheet against the product P is indicated 4. Finally, the product P is placed, in this configuration, in a respective pleated-paper case B.

The aforesaid sequence of steps is preferably carried out automatically according to criteria widely known in the art which do not therefore need to be described in detail herein and which, moreover, are not relevant for the purposes of an understanding of the invention.

For a detailed description of the implementation of the sequence of steps of Figures 1, 3 and 4 and of equipment usable for this purpose, reference may usefully be made, for example, to European patent application EP-A-0 082 952 and to European patent application EP-A-0 591 742.

The specific object of the present invention is to form, on the product P, a decoration D constituted by a cap of a material such as cream, icing, chocolate or the like, deposited on a portion of the product P. This is preferably the cap portion which is intended to face upwards when the product P is packaged in the case B.

In the solution according to the invention, the decorative cap D is formed by pouring a certain mass M of the material (cream, icing, chocolate, etc.) which is to form the cap D into the cup-shaped sheet 1.

The quantity poured into the sheet 1 (Figure 2) is regulated so that, when the product P is inserted in the sheet 1 as shown in Figure 3, the mass M bathes the portion of the product P with which it comes into contact, spreading over it so as to form the decorative cap D.

The precise metering of the material M in the cup-shaped sheet can be achieved, for example, with the use of a pouring machine 5 of which the nozzle portion is shown schematically, placed above the cup-shaped sheet 1, in Figure 2.

Pouring machines of the type specified are widely known in the art. In particular, the pouring machine described in United States patent US-A- 4 787 534 may be used, especially in connection with the pouring of food materials such as chocolate.

The presence of the decorative cap D does not interfere in any way with the closure of the sheet 1 around the product P like a bow (Figure 4). This manipulation of the sheet is in fact carried out on the portions of the product P which are not affected by the deposition of the cap D.

It will be appreciated that, precisely because of the particular way in which it is implemented, the solution according to the invention enables the cap D to be formed accurately on the opposite side of the product P to that on which the sheet wrapper 1 is closed like a bow and pressed (the end piece 4) against the product P. Since the product P is disposed in the case B with the end piece 4 facing the bottom, the cap D is definitely certain to face the mouth portion of the case B, that is, to be on the portion of the product P on which the cap D would be formed by a manual operation carried out with a confectionery syringe or a similar tool.

As shown schematically in Figure 5, when the wrapper 1 has been removed, the product P with the decorative cap D is presented for consumption in substantially the same way as a conventional confectionery product.

Naturally, the principle of the invention remaining the same, the details of construction and forms of embodiment may be varied widely with respect to those described and illustrated, without thereby departing from the scope of the present invention.

## Claims

1. A method of forming a food product (P) packaged in a wrapper of sheet material (1) and having a decorative cap (D) thereon comprising the steps of:
- providing said product (P),
- shaping the sheet material (1) into a generally cup-like configuration so as to form a cavity for housing the product (P),
- pouring (5) a measured quantity of a decorative mass (M) into the housing cavity,
- inserting the product (P) into the housing cavity thereby causing said decorative mass (M) to bathe the portion of the product (P) with which it comes into contact, spreading over it so as to form the decorative cap on the product (P), and
- closing the wrapper of the sheet material (1) around the product (P) and then pressing the wrapper (4) against the side of the product (P) opposite the cap (D) of decorative material.

2. A method according to Claim 1, characterized in that it comprises the step of metering the quantity of the decorative mass (M) in the housing cavity by means of a pouring machine (5).

3. A method according to any one of the preceding claims, characterized in that the decorative mass is selected from the group constituted by cream, icing and chocolate.

4. A packaged food product (P) having a decorative cap (D) produced and packaged by the method according to any of the preceding claims.

## Patentansprüche

1. Verfahren zur Herstellung eines Nahrungsmittels (P), welches in einer Hülle aus Blattmaterial (1) verpackt ist und welches eine dekorative Kappe (D) trägt, mit den folgenden Schritten:
- das Vorsehen des Produkts (P),
- das Formen des Blattmaterials (1) in eine im Wesentlichen tassenartige Konfiguration, so dass ein Hohlraum zur Aufnahme des Produkts (P) gebildet wird,
- das Einfüllen (5) einer abgemessenen Menge einer dekorativen Masse (M) in den Aufnahmehohlraum,
- das Einsetzen des Produkts (P) in den Aufnahmehohlraum, wodurch der Teil des Produkts (P) in die dekorative Masse (M) eintaucht, der mit dieser in Kontakt gerät, wobei die dekorative Masse (M) sich über den Teil des Produkts verteilt und die dekorative Kappe auf dem Produkt (P) bildet, und
- das Schließen der Hülle aus Blattmaterial (1) um das Produkt (P) und das Drücken der Hülle (4) gegen die Seite des Produkts (P), die der Kappe (D) aus dekorativem Material gegenüberliegt.

2. Verfahren nach Anspruch 1, dadurch gekennzeichnet, dass es den Schritt des Abmessens der Menge der dekorativen Masse (M) in dem Aufnahmehohlraums mittels einer Einfüllmaschine (5) beinhaltet.

3. Verfahren nach einem der vorangehenden Ansprüche, dadurch gekennzeichnet, dass die dekorative Masse aus der Gruppe von Sahne, Puderzucker und Schokolade stammt.

4. Ein verpacktes Nahrungsmittel (P) mit einer dekorativen Kappe (D), welches durch das Verfahren nach einem der vorangehenden Ansprüche hergestellt und verpackt worden ist.

## Revendications

1. Procédé pour former un aliment (P) emballé dans un papier d'emballage d'un matériau en feuille (1) et comportant un chapeau décoratif (D) sur lui, comprenant les phases consistant à :
- disposer dudit produit (P),
- façonner le matériau en feuille (1) en une configuration généralement en U afin de former une cavité pour loger le produit (P),
- verser (5) une quantité mesurée d'une masse décorative (M) dans la cavité de logement,
- insérer le produit (P) dans la cavité de logement de manière à amener ladite masse décorative (M) à enrober la partie du produit (P) avec laquelle elle entre en contact, se répandant sur elle afin de former le chapeau décoratif sur le produit (P), et
- fermer le papier d'emballage du matériau en feuille (1) autour du produit (P) puis presser le papier d'emballage (4) contre le côté du produit (P) à l'opposé du chapeau (D) de matière décorative.

2. Procédé selon la revendication 1, caractérisé en ce qu'il comprend la phase consistant à mesurer la quantité de la masse décorative (M) dans la cavité de logement au moyen d'une machine verseuse (5).

3. Procédé selon l'une quelconque des revendications précédentes, caractérisé en ce que la masse décorative est sélectionnée dans le groupe consistant en crème, glaçage et chocolat.

4. Aliment emballé (P) comportant un chapeau décoratif (D) produit et emballé par le procédé selon l'une quelconque des revendications précédentes.
